# EUROPEAN PATENT SPECIFICATION

(11) **EP 1 583 313 B1**
(45) Date of publication and mention of the grant of the patent: **06.06.2007**
(21) Application number: 05006895.6
(22) Date of filing: 30.03.2005
(51) Int. Cl.: H04L 29/06, H04L 12/28

(54) **Network authentication apparatus, network authentication method, network authentication system, and network authentication program**
Verfahren, Vorrichtungen und Programmprodukt zur Authentifizierung eines IT-Endgeräts mittels Identifikationsinformation eines angeschlossenen Mobiltelefons
Méthode, dispositifs et logiciel d'authentification d'un terminal informatique utilisant l'information d'identification d'un téléphone mobile connecté

(30) Priority: 30.03.2004 JP 2004101382
(43) Date of publication of application: 05.10.2005
(73) Proprietor: NEC CORPORATION, Tokyo (JP)
(72) Inventor: Ishii, Tatsuya NEC Corporation, Minato-ku Tokyo (JP)
(74) Representative: von Samson-Himmelstjerna, Friedrich

(56) References cited:
- WO-A-00/31608
- WO-A-01/29731
- US-A- 5 915 224
- US-A1- 2002 194 499
- US-A1- 2003 096 641
- US-A1- 2003 118 045

## Description

### Background of the Invention

The present invention relates to a network authentication apparatus, network authentication method, network authentication system, and network authentication program which perform authentication for wide area network connection at a Hotspot (R) or the like by using a cellular phone.

A cellular phone has a data communication function in addition to a voice communication function, and can connect to the Internet. The advent of so-called third-generation cellular phones has increased the communication speed as well as improving the quality of voice communication. Cellular phones are compact and exhibit good portability, and hence have recently spread as portable terminal devices which can connect to a network such as the Internet (see, for example, Japanese Patent Laid-Open Nos. 2001-211114, 2003-256641, and 2003-331928). As portable terminal devices mainly used for data communication, compact computer devices such a PDA (Personal Data Assistance) and the like have been used (see Japanese Patent Laid-Open Nos. 10-178500 and 2002-320274). Cellular phones are superior in portability than portable terminal devices.

When, however, a cellular phone is to be connected to the Internet, the line speed is lower than that in wire broadband connection by means of ADSL or optical fiber. In addition, Internet connection is unstable because of radio connection. Furthermore, a cellular phone is very compact in consideration of portability, and is partly inferior in operability to a compact computer device such as a so-called notebook computer, because there are limitations on the size of a display unit and the input environment. There is available a system which realize Internet connection by using a compact computer device as a terminal and a radio LAN access point such as a Hotspot (R). This system, however, poses a problem in terms of portability.

US 2003/0096641 A1 discloses a phone embedded within a vehicle for automatically retrieving/requesting authentication information from a personal mobile phone and to use the obtained authentication information to establish communication with a wireless communications network.

US 2003/0118045 A1 discloses a computer having a SIM card interface for obtaining personal information and identification information from a SIM card being connected to the SIM card interface.

US 5,915,244 discloses a multi-network communication arrangement in which mobile and fixed phones can be used for network access.

### Summary of the Invention

It is, therefore, a main object of the present invention to provide a network authentication apparatus, network authentication method, network authentication system, and network authentication program which, when a cellular phone which is convenient to be carried around is connected to a digital network such as a the Internet or a LAN, can send the authentication information of the connected cellular phone to the network.

In order to achieve the above object, according to the present invention, there is provided a network authentication apparatus, according to claim 1 and a respective method as well as a program and systems according to the further independent claims.

### Brief Description of the Drawings

Fig. 1 is a view showing an example of the arrangement of a network authentication system using a network authentication apparatus according to the present invention;
Fig. 1A is a block diagram showing an example of an IT spot terminal device in Fig. 1;
Fig. 2 is a flowchart for explaining an example of the operation of the network authentication system shown in Fig. 1;
Fig. 3 is a flowchart for explaining another example of the operation of the network authentication system shown in Fig. 1;
Fig. 4 is a flowchart for explaining still another example of the operation of the network authentication system shown in Fig. 1;
Fig. 5 is a view showing another example of the arrangement of the network authentication system according to the present invention; and
Fig. 6 is a view showing still another example of the arrangement of the network authentication system according to the present invention.

### Description of the Preferred Embodiment

An embodiment of the present invention will be described below with reference to the accompanying drawings.

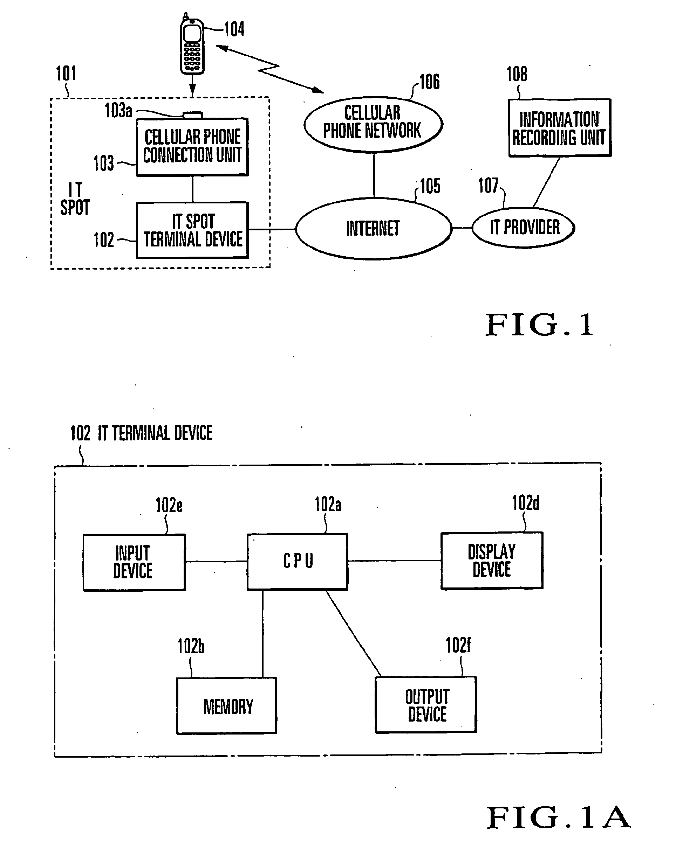

Fig. 1 shows an example of the arrangement of a network authentication system using a network authentication apparatus according to the present invention. This system comprises an IT spot terminal device 102 installed at an IT spot 101, a cellular phone connection unit 103 connected to the IT spot terminal device 102, a cellular phone 104, Internet 105 to which the IT spot terminal device 102 is connected, a cellular phone network 106 connected to the Internet 105, and an IT provider 107 connected to the Internet 105.

The IT spot 101 is a space where Internet connection services are provided for an unspecified number of users by the IT spot terminal device 102. The IT spot terminal device 102 is directly connected to the Internet 105 in the form of ADSL, optical fiber connection, or the like. As shown in Fig. 1A, the IT spot terminal device 102 is a computer device comprising a CPU 102a, a memory 103b, a display device 102d such as a display, an input device 102e such as a keyboard or mouse, and a voice output device 102f such as a speaker, and has high operability.

The cellular phone connection unit 103 has a fitting portion 103a in/from which the cellular phone 104 can be inserted/removed, and is capable of transmitting/receiving information to/from the cellular phone 104 mounted in the fitting portion 103a. For example, the cellular phone connection unit 103 reads device attribute information unique to the cellular phone 104 from the cellular phone 104 mounted in the fitting portion 103a. The device attribute information is information containing an individual identifier such as a telephone number or serial number assigned to the cellular phone 104. The cellular phone connection unit 103 also has a charging function of charging a secondary battery housed in the cellular phone 104.

The cellular phone 104 incorporates a storage unit (not shown) and stores data (information) received through the cellular phone connection unit 103 in the storage unit. In addition, the storage unit stores identifier information containing an identifier set by a user and the like, together with device attribute information. The cellular phone 104 has a telephone function of performing voice communication, an information communication function based on an Internet protocol, a browser function for browsing Web pages upon connection to the Internet 105, and the like.

The IT provider 107 is connected to the Internet 105 and has a LAN (Local Area Network) inside and an information recording unit 108 connected to the IT provider 107 through the LAN. A personal database comprising information of a target user for which Internet connection services are provided, e.g., setting information, personal files, e-mail, and the like, is recorded on the information recording unit 108. The IT provider 107 performs authentication of a connection request from the IT spot terminal device 102 by referring to the personal database prepared in the information recording unit 108.

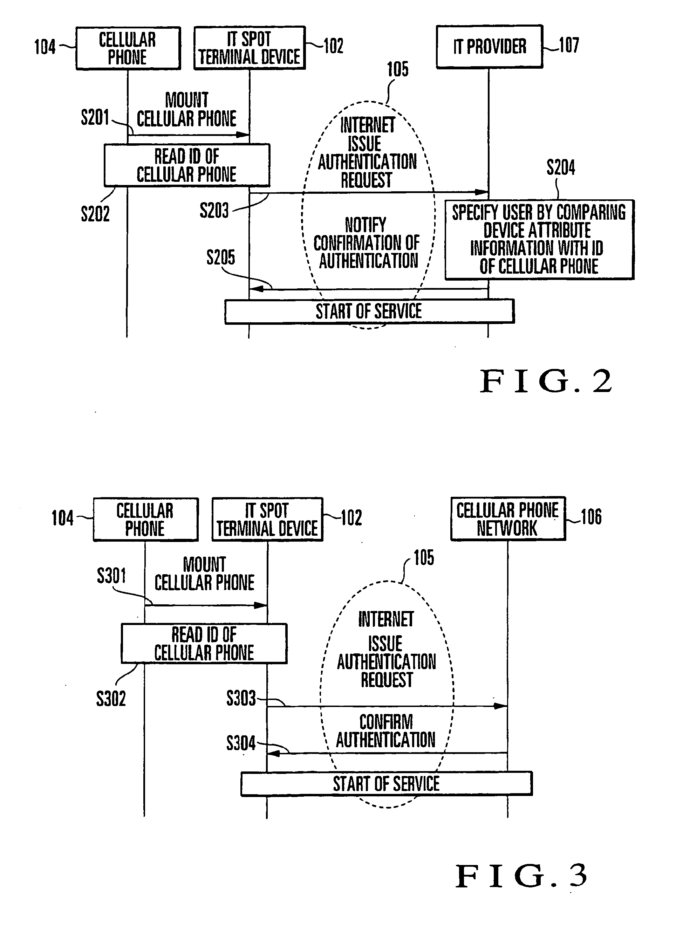

An example of the operation of the network authentication system shown in Fig. 1 will be described next with reference to the flowchart of Fig. 2.

First of all, when the user who owns the cellular phone 104 inserts the cellular phone 104 in the fitting portion 103a of the cellular phone connection unit 103 (step S201), the cellular phone connection unit 103 reads device attribute information from the mounted cellular phone 104 (step S202) and notifies the IT spot terminal device 102 of the read information. The IT spot terminal device 102 temporarily stores the notified device attribute information in a memory 102b in Fig. 1A.

Subsequently, when a log-in request for the IT provider 107 and a predetermined password are input by the operation of the user, the IT spot terminal device 102 sends out the log-in request to the IT provider 107, together with the input password and temporarily stored device attribute information (step S203).

Upon receiving the sent log-in request, password, and device attribute information, the IT provider 107 performs authentication by comparing the received information with the information recorded on the information recording unit 108 (step S204). When the user is specified and authentication is complete, the IT provider 107 notifies the IT spot terminal device 102 of the confirmation of authentication (step S205). Upon receiving the authentication confirmation notification, the IT spot terminal device 102 displays, on the display device 102d, information indicating that the IT spot terminal device 102 has logged in to the IT provider 107.

When the IT spot terminal device 102 logs in to the IT provider 107, the IT spot terminal device 102 can access the personal database and the like in the information recording unit 108. As a consequence, the user can, for example, download individual setting information from the personal database, refer to/edit personal data, and refer to/transmit/receive e-mail by operating the IT spot terminal device 102. In addition, the user can browse Web pages by using the IT spot terminal device 102.

Since the cellular phone connection unit 103 has a cellular phone charging function, the cellular phone 104 is charged while the user operates the IT spot terminal device 102.

In addition, various kinds of data on the Internet 105 can be transferred to the cellular phone 104 through the cellular phone connection unit 103 and IT spot terminal device 102. Likewise, data recorded on the cellular phone 104 can be sent out to the Internet 105.

The cellular phone 104 can access the Internet 105 through the cellular phone network 106. In this case, the user uses the input function of the cellular phone 104, resulting in a deterioration in operability. In addition, in this case, access to the Internet 105 is limited to the communication speed of the cellular phone 104.

An example of how to connect to the cellular phone network 106 by using the IT spot terminal device 102 will be described next with reference to the flowchart of Fig. 3.

When the user who owns the cellular phone 104 mounts the cellular phone 104 on the cellular phone connection unit 103 (step S301), the cellular phone connection unit 103 reads the identification information set (recorded) in the cellular phone 104 from the mounted cellular phone 104 (step S302), and notifies the IT spot terminal device 102 of the identification information. The IT spot terminal device 102 temporarily stores the notified identification information in the memory 102b.

When a log-in request and predetermined password for the cellular phone network 106 are input afterward by the operation of the user, the IT spot terminal device 102 sends out the log-in request to the cellular phone network 106, together with the input password and the identification information temporarily stored in the memory 102b (step S303). Upon receiving the sent log-in request, password, and identification information, the cellular phone network 106 performs authentication by using the received information, and notifies the IT spot terminal device 102 of the confirmation of authentication (step S304).

Upon receiving the confirmation notification of authentication, the IT spot terminal device 102 displays, on the display device 102d, information indicating that the IT spot terminal device 102 has been connected to the cellular phone network 106.

When the IT spot terminal device 102 logs in to the cellular phone network 106, the IT spot terminal device 102 can receive various services through the cellular phone network 106. In addition, the user can browse Web pages by using the IT spot terminal device 102.

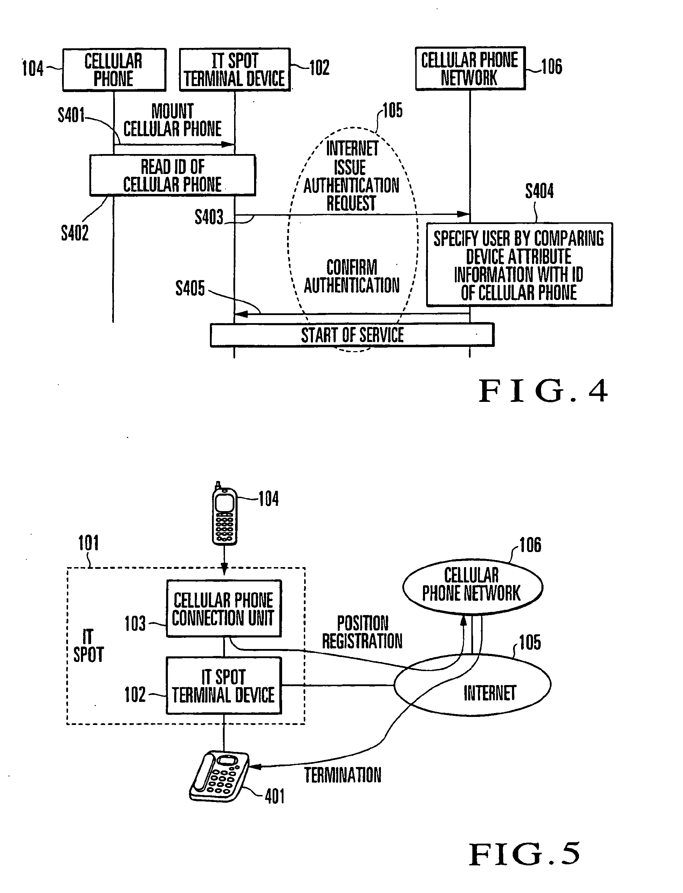

Another example of how to connect to the cellular phone network 106 by using the IT spot terminal device 102 will be described next with reference to the flowchart of Fig. 4. The following is a case wherein the cellular phone 104 has a noncontact IC card function called FeliCa.

When the user who owns the cellular phone 104 mounts the cellular phone 104 on the cellular phone connection unit 103 (step S401), the cellular phone connection unit 103 reads the device attribute information (FeliCa information) held by the FeliCa function from the cellular phone 104 (step S402), and notifies the IT spot terminal device 102 of the information. The IT spot terminal device 102 temporarily stores the notified FeliCa information in the memory 102b.

When a log-in request for the cellular phone network 106 and predetermined password are input afterward by the operation of the user, the IT spot terminal device 102 sends out the log-in request to the cellular phone network 106, together with the FeliCa information temporarily stored in the memory 102b (step S403). Upon receiving the sent log-in request, password, and FeliCa information, the cellular phone network 106 performs authentication by using the received information (step S404). The cellular phone network 106 includes a database for specifying cellular phones and a database for specifying FeliCa information, and performs the above authentication by referring to these databases.

When the user is specified and authentication is completed by the above authentication processing, the cellular phone network 106 notifies the IT spot terminal device 102 of the confirmation of authentication (step S405) .

Upon receiving the confirmation notification of authentication, the IT spot terminal device 102 displays, on the display device 102d, information indicating that the IT spot terminal device 102 has been connected to the cellular phone network 106.

When the IT spot terminal device 102 logs in to the cellular phone network 106, the IT spot terminal device 102 can receive various services through the cellular phone network 106. In addition, the user can browse Web pages by using the IT spot terminal device 102.

Furthermore, as shown in Fig. 5, a fixed telephone set 401 may be connected to the IT spot terminal device 102.

As described above, when the IT spot terminal device 102 is connected to the cellular phone network 106 through the Internet 105 upon authentication using the cellular phone 104, a call to the cellular phone 104 (the telephone number of the cellular phone 104) is terminated by the fixed telephone set 401.

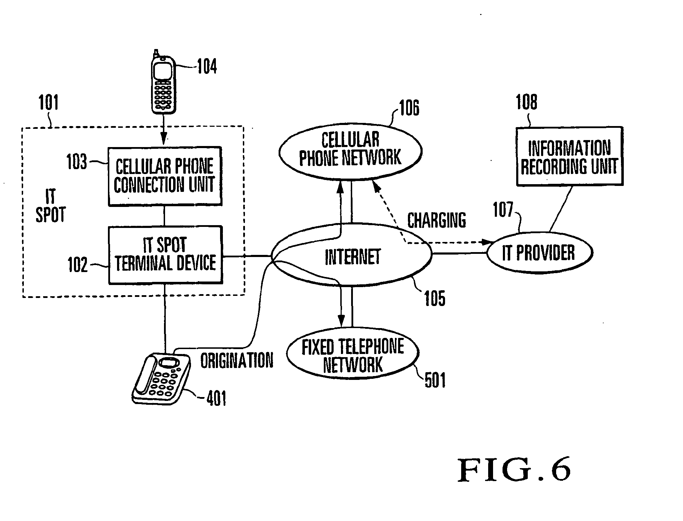

As shown in Fig. 6, the fixed telephone set 401 can originate a call to the cellular phone network 106 or a fixed telephone network 501. In this case, a telephone rate is charged by the IT provider 107 or the carrier of the cellular phone network 106 with which the user is under contract. It suffices for the user to pay the above telephone rate as an Internet connection fee and cellular phone rate.

As described above, the IT spot terminal device 102 is, for example, a computer, and includes the CPU 102a, the memory 102b, the display device 102d, the input device 102e such as a keyboard or mouse, the voice output device 102f, a network connection device, and the like. The IT spot terminal device 102 implements each function described above by making the CPU 102a execute a corresponding program recorded on the memory 102b.

The above description has exemplified the IT provider 107. However, the present invention is not limited to this, and may be applied to a server provided for a local area network provided in a business organization. In this case, the server includes an information recording unit, on which individual information and the like are recorded.

As has been described above, according to the present invention, the IT terminal device connected to the Internet reads out device attribute information containing individual identification information of a cellular phone, and uses the read device attribute information as authentication information. This makes it possible to obtain an excellent effect, i.e., realizing an environment, in an unevenly distributed state, which allows connection to the Internet by using a cellular phone with better operability.

According to the present invention, there is provided a program for causing a computer to execute a process of reading out device attribute information containing the individual identification information of a cellular phone from the cellular phone which is inserted in the fitting portion of a cellular phone connection unit in/from which the cellular phone can be inserted/removed, and a process of sending out the read device attribute information as authentication information to the Internet.

In the above embodiment, device attribute information may be read out from the storage unit of the cellular phone. In addition, the information acquired by the IT terminal device through the Internet may be recorded on the storage unit of the cellular phone connected to the cellular phone connection unit.

In the above embodiment, the IT spot terminal device may be connected to a digital network such as a LAN in a company or private LAN or a digital data network. In this case, the IT spot terminal device 102 incorporates a protocol for connection to the LAN as well as a protocol for connection to the Internet.

## Claims

1. A network authentication apparatus, comprising:
a cellular phone connection unit (103) which includes a fitting portion (103a) which is adapted to insert/remove a cellular phone (104) therein/therefrom; and
a cellular phone adapted to be inserted in said fitting portion,
an IT terminal device (102) which is connected to said cellular phone connection unit (103) and adapted to be connected to a digital network (105),
wherein said IT terminal device (102) is adapted
to read out device attribute information containing individual identification information of said cellular phone (104) if inserted in said fitting portion (103a) whereby being connected to said cellular phone connection unit (103) and
to send out the readout device attribute information as authentication information to the digital network (105) ;
**characterized in that**
said IT terminal device (102) includes a memory (102b) adapted to temporarily store the readout device attribute information before sending out the readout device attribute information as authentication information to the digital network (105), and the IT terminal device is adapted to send out the readout device attribute information stored in the memory (102b) in the case of a log-in request for a provider (107) connected to the digital network (105); and
said IT terminal device (102) is adapted to transfer at least one of
data recorded in the cellular phone (104) to the digital network (105) and
data of the digital network (105) to the cellular phone (104)
via the cellular phone connection unit (103).

2. The apparatus according to claim 1, wherein the device attribute information comprises device attribute information read out from a memory which the cellular phone (104) includes.

3. The apparatus according to claim 2, wherein the device attribute information comprises information which records the information, acquired by said IT terminal device (102) through the digital network (105), on the memory of the cellular phone (104) connected to said cellular phone connection unit (103).

4. The apparatus according to claim 1, further comprising a fixed telephone set connected to said IT terminal device (102) .

5. The apparatus according to claim 1, wherein said IT terminal device (102) includes a processing device (102a) being adapted to read device attribute information from the cellular phone (104).

6. A network authentication method comprising the steps of:
providing a cellular phone connection unit (103) which includes a fitting portion (103a) in/from which a cellular phone (104) can be inserted/removed, and an IT terminal device (102) which is connected to the cellular phone connection unit (103), includes a memory (102b) and an input unit, and is connected to a digital network (105);
inserting the cellular phone (104) in the fitting portion (130a) ;
reading out device attribute information containing individual identification information of the cellular phone (104) being connected to the cellular phone connection unit (103) via the fitting portion (103a);
temporarily storing the readout device attribute information in the memory (102b); and
sending out, by the IT terminal device (102), the readout device attribute information stored in the memory (102b) as authentication information to the digital network (105) in the case of a log-in request for a provider (107) connected to the digital network (105); and
transferring at least one of data recorded in the cellular phone (104) to the digital network (105) and
data of the digital network (105) to the cellular phone (104)
via the cellular phone connection unit (103) and the IT terminal device (102).

7. The method according to claim 6, wherein the device attribute information comprises device attribute information read out from a memory (102b) which the cellular phone (104) includes.

8. A method according to claim 7, wherein the device attribute information comprises information which records the information, acquired by the IT terminal device (102) through the digital network (105), on the memory (102b) of the cellular phone (104) connected to the cellular phone connection unit (103) .

9. A program **characterized by** comprising a network authentication program for causing a computer to execute the steps according to claim 6.

10. A network authentication system, comprising:
the network authentication apparatus (101) according to claim 1, wherein said IT terminal device (102) further comprises a display unit (102d) and an input unit (102e), said network authentication apparatus (101) further comprising a fixed telephone set (401) connected to said IT terminal device (102); and
a provider apparatus (107) connected through the digital network (105) and including an information storage unit (108) which includes an individual information recording database and is connected to said network authentication apparatus (101).

11. A network authentication system, comprising:
the network authentication apparatus (101) according to claim 1, wherein said IT terminal device (102) further comprises a display unit (102d) and an input unit (102e), said network authentication apparatus (101) further comprising a fixed telephone set (401) connected to said IT terminal device (102); and
a cellular phone network (104) and a fixed telephone network (501) which are connected to the digital network (105).

12. A network authentication system, comprising:
the network authentication apparatus (101) according to claim 1, wherein said IT terminal device (102) further comprises a display unit (102d) and an input unit (102e), said network authentication apparatus (101) further comprising a fixed telephone set (401) connected to said IT terminal device (102); and
a fixed telephone network (501) connected to the IT terminal device (102).

13. A network authentication system, comprising:
the network authentication apparatus according to claim 1, wherein said IT terminal device (102) further comprises a display unit (102d) and an input unit (102e), said network authentication apparatus (101) further comprising a fixed telephone set (401) connected to said IT terminal device (102);
a provider apparatus (107) connected through the digital network (105) and including an information storage unit (108) which includes an individual information recording database and is connected to said network authentication apparatus (101); and
a fixed telephone network (501) connected to the digital network (105).

## Patentansprüche

1. Netzwerkauthentifizierungsvorrichtung mit:
einer Anschlusseinheit (103) für zelluläre Telefone, die einen Befestigungsteil (103a) aufweist, der ausgelegt ist, ein zelluläres Telefon (104) darin/davon einzusetzen/zu entfernen; und
einem zellulären Telefon, das ausgelegt ist, in den Befestigungsteilen eingesetzt zu werden;
einer IT-Endgerätevorrichtung (102), die mit der Anschlusseinheit (103) für zelluläre Telefone verbunden und ausgelegt ist, mit einem digitalen Netzwerk (105) verbunden zu werden,
wobei die IT-Endgerätevorrichtung (102) ausgelegt ist,
Vorrichtungsmerkmalsinformation auszulesen, die individuelle Identifikationsinformation des zellulären Telefons (104) enthält, wenn es in den Befestigungsteil (103a) eingesetzt ist, wodurch es mit der Anschlusseinheit (103) für zelluläre Telefone verbunden ist, und
die ausgelesene Vorrichtungsmerkmalsinformation als Authentifizierungsinformation zu dem digitalen Netzwerk (105) zu senden;
**dadurch gekennzeichnet, dass**
die IT-Endgerätevorrichtung (102) einen Speicher (102b) aufweist, der ausgelegt ist, die ausgelesene Vorrichtungsmerkmalsinformation temporär zu speichern, bevor die ausgelesene Vorrichtungsmerkmalsinformation als Authentifizierungsinformation zu dem digitalen Netzwerk (105) ausgesendet wird, und die IT-Endgerätevorrichtung ausgelegt ist, die ausgelesene Vorrichtungsmerkmalsinformation, die in dem Speicher (102b) gespeichert ist, im Fall einer Anmelde-Anfrage an einen Provider (107) auszusenden, der mit dem digitalen Netzwerk (105) verbunden ist; und
die IT-Endgerätevorrichtung (102) ausgelegt ist, wenigstens eines von
Daten, die in dem zellulären Telefon (104) aufgezeichnet sind, zu dem digitalen Netzwerk (105) und
Daten des digitalen Netzwerks (105) zu dem zellulären Telefon (104)
über die Anschlusseinheit (103) für zelluläre Telefone zu übertragen.

2. Vorrichtung nach Anspruch 1, bei der die Vorrichtungsmerkmalsinformation aus einem Speicher, den das zelluläre Telefon (104) aufweist, ausgelesene Vorrichtungsmerkmalsinformation umfasst.

3. Vorrichtung nach Anspruch 2, bei der die Vorrichtungsmerkmalsinformation Information umfasst, die die von der IT-Endgerätevorrichtung (102) über das digitale Netzwerk (105) erlangte Information in dem Speicher des zellulären Telefons (104), das mit der Anschlusseinheit (103) für zelluläre Telefone verbunden ist, aufzeichnet.

4. Vorrichtung nach Anspruch 1, ferner ein ortsfestes Telefongerät umfassend, das mit der IT-Endgerätevorrichtung (102) verbunden ist.

5. Vorrichtung nach Anspruch 1, bei der die IT-Endgerätevorrichtung (102) eine Verarbeitungsvorrichtung (102a) aufweist, die ausgelegt ist, Vorrichtungsmerkmalsinformation von dem zellulären Telefon (104) zu lesen.

6. Netzwerkauthentifizierungsverfahren, die Schritte umfassend:
Bereitstellen einer Anschlusseinheit (103) für zelluläre Telefone, die einen Befestigungsteil (103a) aufweist, in den/von dem ein zelluläres Telefon (104) eingesetzt/entfernt werden kann, und einer IT-Endgerätevorrichtung (102), die mit der Anschlusseinheit (103) für zelluläre Telefone verbunden ist, einen Speicher (102b) und eine Eingabeeinheit aufweist und mit einem digitalen Netzwerk (105) verbunden ist;
Einsetzen des zellulären Telefons (104) in den Befestigungsteil (103a) ;
Auslesen von Vorrichungsmerkmalsinformation, die individuelle Identifikationsinformation des zellulären Telefons (104) enthält, das mit der Anschlusseinheit (103) für zelluläre Telefone verbunden ist, über den Befestigungsteil (103a);
temporäres Speichern der ausgelesenen Vorrichtungsmerkmalsinformation in dem Speicher (102b); und
Aussenden mittels der IT-Endgerätevorrichtung (102) der ausgelesenen Vorrichtungsmerkmalsinformation, die in dem Speicher (102b) gespeichert ist, als Authentifizierungsinformation zu dem digitalen Netzwerk (105) im Fall einer Anmelde-Anfrage an einen Provider (107), der mit dem digitalen Netzwerk (105) verbunden ist; und
Übertragen von wenigstens einem von
Daten, die in dem zellulären Telefon (104) aufgezeichnet sind, zu dem digitalen Netzwerk und
Daten des digitalen Netzwerks (105) zu dem zellulären Telefon (104)
über die Anschlusseinheit (103) für zelluläre Telefone und die IT-Endgerätevorrichtung (102).

7. Verfahren nach Anspruch 6, bei dem die Vorrichtungsmerkmalsinformation aus einem Speicher, den das zelluläre Telefon (104) aufweist, ausgelesene Vorrichtungsmerkmalsinformation umfasst

8. Verfahren nach Anspruch 7, bei dem die Vorrichtungsmerkmalsinformation Information umfasst, die die von der IT-Endgerätevorrichtung (102) über das digitale Netzwerk (105) erlangte Information in dem Speicher des zellulären Telefons (104), das mit der Anschlusseinheit (103) für zelluläre Telefone verbunden ist, aufzeichnet.

9. Programm, **dadurch gekennzeichnet, dass** es ein Netzwerkautentifizierungsprogramm umfasst, um zu bewirken, dass ein Computer die Schritte gemäß Anspruch 6 ausführt.

10. Netzwerkauthentifizierungssystem, mit:
der Netzwerkauthentifizierungsvorrichtung (101) gemäß Anspruch 1, bei der die IT-Endgerätevorrichtung (102) ferner eine Anzeigeeinheit (102d) und eine Eingabeeinheit (102e) umfasst, wobei die Netzwerkauthentifizierungsvorrichtung (101) ferner ein ortsfestes Telefongerät (401) umfasst, das mit der IT-Endgerätevorrichtung (102) verbunden ist; und
einer Providervorrichtung (107), die über das digitale Netzwerk (105) angeschlossen ist und eine Informationsspeichereinheit (108) aufweist, die eine Datenbasis zum Aufzeichnen von individueller Information aufweist und mit der Netzwerkauthentifizierungsvorrichtung (101) verbunden ist.

11. Netzwerkauthentifizierungssystem, mit:
der Netzwerkauthentifizierungsvorrichtung (101) gemäß Anspruch 1, bei der die IT-Endgerätevorrichtung (102) ferner eine Anzeigeeinheit (102d) und eine Eingabeeinheit (102e) umfasst, wobei die Netzwerkauthentifizierungsvorrichtung (101) ferner ein ortsfestes Telefongerät (401) aufweist, das mit der IT-Endgerätevorrichtung (102) verbunden ist; und
einem Netzwerk (104) für zelluläre Telefone und einem Netzwerk (501) für ortsfeste Telefone, die mit dem digitalen Netzwerk (105) verbunden sind.

12. Netzwerkauthentifizierungssystem, mit:
der Netzwerkauthentifizierungsvorrichtung (101) gemäß Anspruch 1, bei der die IT-Endgerätevorrichtung (102) ferner eine Anzeigeeinheit (102d) und eine Eingabeeinheit (102e) umfasst, wobei die Netzwerkauthentifizierungsvorrichtung (101) ferner ein ortsfestes Telefongerät (401) umfasst, das mit der IT-Endgerätevorrichtung (102) verbunden ist; und
einem Netzwerk (501) für ortsfeste Telefone, das mit der IT-Endgerätevorrichtung (102) verbunden ist.

13. Netzwerkauthentifizierungssystem, mit:
der Netzwerkauthentifizierungsvorrichtung gemäß Anspruch 1, bei der die IT-Endgerätevorrichtung (102) ferner eine Anzeigeeinheit (102d) und eine Eingabeeinheit (102e) umfasst, wobei die Netzwerkauthentifizierungsvorrichtung (101) ferner ein ortsfestes Telefongerät (401) umfasst, das mit der IT-Endgerätevorrichtung (102) verbunden ist;
einer Providervorrichtung (107), die über das digitale Netzwerk (105) angeschlossen ist und eine Informationsspeichereinheit (108) aufweist, die eine Datenbasis zum Aufzeichnen von individueller Information aufweist und mit der Netzwerkauthentifizierungsvorrichtung (101) verbunden ist; und
einem Netzwerk (501) für ortsfeste Telefone, das mit dem digitalen Netzwerk (105) verbunden ist.

## Revendications

1. Dispositif d'authentification de réseau, comportant :
une unité de connexion de téléphone cellulaire (103) qui inclut une partie de fixation (103a) qui est adaptée pour insérer un téléphone cellulaire (104) dans celle-ci et le retirer de celle-ci, et
un téléphone cellulaire adapté pour être inséré dans ladite partie de fixation,
un dispositif de terminal IT (102) qui est connecté à ladite unité de connexion de téléphone cellulaire (103) et adapté pour être connecté à un réseau numérique (105),
dans lequel ledit dispositif de terminal IT (102) est adapté
pour extraire des informations d'attribut de dispositif contenant des informations d'identification individuelles dudit téléphone cellulaire (104) s'il est inséré dans ladite partie de fixation (103a) de manière à être connecté à ladite unité de connexion de téléphone cellulaire (103) et
pour envoyer les informations d'attribut de dispositif extraites en tant qu'informations d'authentification au réseau numérique (105),
**caractérisé en ce que**
ledit dispositif de terminal IT (102) inclut une mémoire (102b) adaptée pour mémoriser temporairement les informations d'attribut de dispositif extraites avant d'envoyer les informations d'attribut de dispositif extraites en tant qu'informations d'authentification au réseau numérique (105), et le dispositif de terminal IT est adapté pour envoyer les informations d'attribut de dispositif extraites mémorisées dans la mémoire (102b) dans le cas d'une demande d'ouverture de session pour un fournisseur (107) connecté au réseau numérique (105), et
ledit dispositif de terminal IT (102) est adapté pour transférer au moins des données parmi
des données enregistrées dans le téléphone cellulaire (104) vers le réseau numérique (105) et
des données du réseau numérique (105) vers le téléphone cellulaire (104)
via l'unité de connexion de téléphone cellulaire (103).

2. Dispositif selon la revendication 1, dans lequel les informations d'attribut de dispositif comportent des informations d'attribut de dispositif extraites d'une mémoire que le téléphone cellulaire (104) inclut.

3. Dispositif selon la revendication 2, dans lequel les informations d'attribut de dispositif comportent des informations qui enregistrent les informations, acquises par ledit dispositif de terminal IT (102) via le réseau numérique (105), sur la mémoire du téléphone cellulaire (104) connecté à ladite unité de connexion de téléphone cellulaire (103).

4. Dispositif selon la revendication 1, comportant en outre un poste téléphonique fixe connecté audit dispositif de terminal IT (102).

5. Dispositif selon la revendication 1, dans lequel ledit dispositif de terminal IT (102) inclut un dispositif de traitement (102a) étant adapté pour lire des informations d'attribut de dispositif à partir du téléphone cellulaire (104).

6. Procédé d'authentification de réseau comportant les étapes consistant à :
fournir une unité de connexion de téléphone cellulaire (103) qui inclut une partie de fixation (103a) dans laquelle un téléphone cellulaire (104) peut être inséré et depuis laquelle il peut être retiré, et un dispositif de terminal IT (102) qui est connecté à l'unité de connexion de téléphone cellulaire (103), inclut une mémoire (102b) et une unité d'entrée, et est connectée à un réseau numérique (105),
insérer le téléphone cellulaire (104) dans la partie de fixation (103a),
extraire des informations d'attribut de dispositif contenant des informations d'identification individuelles du téléphone cellulaire (104) étant connecté à l'unité de connexion de téléphone cellulaire (103) via la partie de fixation (103a),
mémoriser temporairement les informations d'attribut de dispositif extraites dans la mémoire (102b), et
envoyer, par l'intermédiaire du dispositif de terminal IT (102), les informations d'attribut de dispositif extraites mémorisées dans la mémoire (102b) en tant qu'informations d'authentification au réseau numérique (105) dans le cas d'une demande d'ouverture de session pour un fournisseur (107) connecté au réseau numérique (105), et
transférer au moins des données parmi
des données enregistrées dans le téléphone cellulaire (104) vers le réseau numérique (105) et
des données du réseau numérique (105) vers le téléphone cellulaire (104)
via l'unité de connexion de téléphone cellulaire (103) et le dispositif de terminal IT (102).

7. Procédé selon la revendication 6, dans lequel les informations d'attribut de dispositif comportent des informations d'attribut de dispositif extraites d'une mémoire (102b) que le téléphone cellulaire (104) inclut.

8. Procédé selon la revendication 7, dans lequel les informations d'attribut de dispositif comportent des informations qui enregistrent les informations, acquises par le dispositif de terminal IT (102) via le réseau numérique (105), sur la mémoire (102b) du téléphone cellulaire (104) connecté à l'unité de connexion de téléphone cellulaire (103).

9. Programme **caractérisé par le fait qu'**il comporte un programme d'authentification de réseau pour amener un ordinateur à exécuter les étapes conformément à la revendication 6.

10. Système d'authentification de réseau, comportant :
le dispositif d'authentification de réseau (101) selon la revendication 1, dans lequel ledit dispositif de terminal IT (102) comporte en outre une unité d'affichage (102d) et une unité d'entrée (102e), ledit dispositif d'authentification de réseau (101) comportant en outre un poste téléphonique fixe (401) connecté audit dispositif de terminal IT (102), et
un dispositif de fournisseur (107) connecté via le réseau numérique (105) et incluant une unité de mémorisation d'informations (108) qui inclut une base de données d'enregistrement d'informations individuelle et est connectée audit dispositif d'authentification de réseau (101).

11. Système d'authentification de réseau, comportant :
le dispositif d'authentification de réseau (101) selon la revendication 1, dans lequel ledit dispositif de terminal IT (102) comporte en outre une unité d'affichage (102d) et une unité d'entrée (102e), ledit dispositif d'authentification de réseau (101) comportant en outre un poste téléphonique fixe (401) connecté audit dispositif de terminal IT (102), et
un réseau téléphonique cellulaire (104) et un réseau téléphonique fixe (501) qui sont connectés au réseau numérique (105).

12. Système d'authentification de réseau, comportant :
le dispositif d'authentification de réseau (101) selon la revendication 1, dans lequel ledit dispositif de terminal IT (102) comporte en outre une unité d'affichage (102d) et une unité d'entrée (102e), ledit dispositif d'authentification de réseau (101) comportant en outre un poste téléphonique fixe (401) connecté audit dispositif de terminal IT (102), et
un réseau téléphonique fixe (501) connecté audit dispositif de terminal IT (102).

13. Système d'authentification de réseau, comportant :
le dispositif d'authentification de réseau selon la revendication 1, dans lequel ledit dispositif de terminal IT (102) comporte en outre une unité d'affichage (102d) et une unité d'entrée (102e), ledit dispositif d'authentification de réseau (101) comportant en outre un poste téléphonique fixe (401) connecté audit dispositif de terminal IT (102),
un dispositif de fournisseur (107) connecté via le réseau numérique (105) et incluant une unité de mémorisation d'informations (108) qui inclut une base de données d'enregistrement d'informations individuelles et est connectée audit dispositif d'authentification de réseau (101), et
un réseau téléphonique fixe (501) connecté au réseau numérique (105).
